# EUROPEAN PATENT APPLICATION

(11) **EP 4 497 956 A1**
(43) Date of publication of application: **29.01.2025**
(21) Application number: 24190893.8
(22) Date of filing: 25.07.2024
(51) Int. Cl.: F16B 1/02, F16B 13/00, F16B 33/00

(54) **CONNECTING MEANS FOR A FRAME, AND FRAME, DOOR OR WINDOW SASH WITH SUCH CONNECTING MEANS**

(30) Priority: 25.07.2023 NL 2035474
(71) Applicant: Fitrum B.V., 7475 VA Markelo (NL)
(72) Inventor: Ligtenbarg, Eddy, 7475 VA Markelo (NL)
(74) Representative: Arnold & Siedsma

(57) **Abstract**

The invention relates to connecting means for mutually connecting two construction parts positioned substantially at right angles to each other, including a first construction part and a second construction part which lies with its end surface against the first construction part in a mutually connected position. The connecting means comprise a bolt and a bush. According to the invention, the connecting means are manufactured from a fibre-reinforced plastic. The invention also relates to a frame and to a door or window sash made with such connecting means.

## Description

The invention relates to connecting means for mutually connecting two construction parts positioned substantially at right angles to each other, including a first construction part and a second construction part which lies with its end surface against the first construction part in a mutually connected position, such as the sill and the jamb of a frame, wherein the connecting means comprise:
- a bolt, which is provided at a first end with a head and is provided at a second, opposite end with first screw means; and
- a bush, which is substantially elongate and is provided with second screw means accessible from its side surface in a direction transversely of a longitudinal direction,
wherein the first and second screw means are configured to co-act with each other.

Such connecting means are per se known, for instance as per se known cylinder nut (also referred to as cross dowel nut) and corresponding bolt. In this respect the invention also relates to connecting means comprising a cross dowel nut (as bush) and a bolt, and optionally having the features described below.

The known combination of cylinder nut and bolt is however not necessarily suitable for all applications. An application wherein the requirements made of connecting means are particularly strict is for instance the manufacture of frames, more particularly frames of generally listed buildings, where wooden components must be used due to legislation or for aesthetic reasons. Known connecting means, whether they be cylinder nuts and corresponding bolts or other types of connecting means such as corner pieces, have various drawbacks. This being in the case of existing cylinder nuts in combination with a bolt that they promote formation of condensation. It is precisely in combination with a for instance wooden frame that this is problematic, since condensation may cause rot or other damage, or may necessitate maintenance. Although other connections can be envisaged, they generally have other drawbacks, such as a lack of recyclability.

It is therefore an object to provide connecting means which at least partially solve one or more of these problems.

The object can be achieved with connecting means of the type stated in the preamble, wherein the connecting means are manufactured from a fibre-reinforced plastic.

Using a fibre-reinforced plastic makes it possible to meet strict requirements in respect of the mechanical loadability, while formation of condensation is prevented. The relatively low heat conduction coefficient that fibre-reinforced plastics generally have particularly ensures that no cold bridge is created from outside the frame to inside, where condensation could result due to temperature differences. The limited heat capacity of the material likewise contributes to the prevention of condensation when the ambient temperature for instance changes rapidly from relatively cold to relatively warm.

The fibre-reinforced plastic can for instance comprise polyamide 6 (also referred to as nylon 6), particularly as matrix of the fibre-reinforced plastic. The fibres are particularly glass fibres.

Applicant has found that connecting means, therefore optionally both of the same material, of such material are sufficiently strong and simultaneously have the correct condensation properties.

As far as known by applicant, connecting means as described here make it possible for the first time to use cross dowel nuts and bolts for putting together a frame. This achieves that the frame can also be taken apart, since the screw connection is releasable. This makes it relatively simple to recycle the frame, which therefore meets stricter sustainability requirements. It can therefore also be seen as objective of the application to provide a more sustainable frame. The relatively long lifespan of the connecting means enables them and/or other parts of the frame to be reused.

The releasable character of the connecting means also enables the frame to be for instance partially replaced before the end of its lifespan. It is for instance possible to envisage replacing only a part, such as a jamb or sill, in the event of damage or maintenance, while the rest of the construction - such as a frame - can be reused. This is in contrast particularly to known frames which are glued. This is because, in that case, the corner must be sawn out, which is labour-intensive. At the same time, the removed corner is not recyclable (due to the adhesive), while, with the connecting means as described here, the removed construction parts are recyclable.

The bush can be substantially cylindrical. This simplifies insertion, and enables a hole in which the bush fits to be provided by means of for instance a drill.

The bush can be provided with an optionally continuous hole, in which the bolt can be at least partially received. It is particularly the second end of the bolt that is received in the hole. A strong connection can be realized in this way.

The bush can be provided at an end, for instance a longitudinal end such as an end surface, with a non-rotation-symmetrical recess, such as a gap or cross-shaped recess. With such a recess the rotation position of the bush can be determined and can be adjusted, for instance using a tool. The hole of the bush can thus for instance be aligned with the bolt.

In practical manner the hole in the bush is provided with an internal screw thread on an outer wall, i.e. a peripheral wall of the hole, so as to form the second screw means. At the same time, the bolt is preferably provided with an external screw thread so as to form the first screw means.

It is advantageous for the bolt to comprise a first segment and a second segment, wherein the second segment comprises the second end and extends toward the head, and the first segment extends between the head and the second segment, preferably from head to second segment, wherein screw thread is provided only in the second segment.

In this way only an end zone of the bolt therefore has a screw thread. The first segment can then for instance take a smooth form, i.e. without screw thread and substantially cylindrical. The first segment can thereby fit particularly well in holes provided for the bolt, and leave relatively little space therein. Less air is therefore present around the bolt inside these holes, this preventing condensation further.

The bolt preferably has at the position of the second segment an outer diameter which is at most equal to and is preferably smaller than an outer diameter of the bolt at the position of the first segment.

By narrowing the bolt in the second segment the bush can take a relatively small form. This reduces the total space required for use of the connecting means, making them more suitable for even relatively narrow frames.

The second segment can be shorter than the first segment, preferably more than 50% shorter, preferably more than 70% shorter, such as 70% - 80% shorter, such as about 78% shorter.

By applying the narrowing only locally the amount of space around the bolt is limited, whereby formation of condensation is once again counteracted.

The invention also relates to a frame having a sill as first construction part and a jamb as second construction part, or vice versa, wherein the second construction part lies with its end surface against the first construction part, wherein the first and the second construction part are connected to each other by means of connecting means according to any one of the foregoing claims.

The frame is preferably made of wood.

The frame can be adapted to the connecting means, for instance by providing the first construction part with a continuous hole through which the bolt is placed, wherein the hole is aligned with the second construction part, and is preferably provided on a side of the first construction part opposite the second construction part with a recess for receiving the head of the bolt. The second construction part can be provided with a first, optionally blind hole, and wherein the bush is arranged in the hole, and wherein the second construction part is provided with a second hole extending from the end surface into the first hole for the purpose of placing the bolt therethrough.

Finally, a window pane can be mounted in the frame, wherein the window pane is manufactured from vacuum glass. The use of vacuum glass makes it possible to achieve relatively high insulating values, while relatively little thickness is needed in the frame. As described above, the connecting means also contribute to a relatively limited thickness of the frame being required, so that these features for instance together provide for a frame which can be used in listed buildings, or other applications where thin, preferably wooden, frames are desirable or necessary.

It is further noted that, instead of a frame, it is further also possible to make a sash for a window or door with the connecting means as described here. Such a sash can consist of mutually connected stiles and rails in the manner as described here, optionally further comprising a window or other construction parts for forming the window or the door. The construction parts connected with the connecting means thus form a sash around for instance the window or door.

The invention is further elucidated with reference to the figures, in which:
Figures 1A and 1B show schematic views of a bolt;
Figures 2A and 2B show schematic views of a bush; and
Figure 3 shows schematically a part of a frame in cross-section.

Corresponding elements are designated in the figures with corresponding numerals.

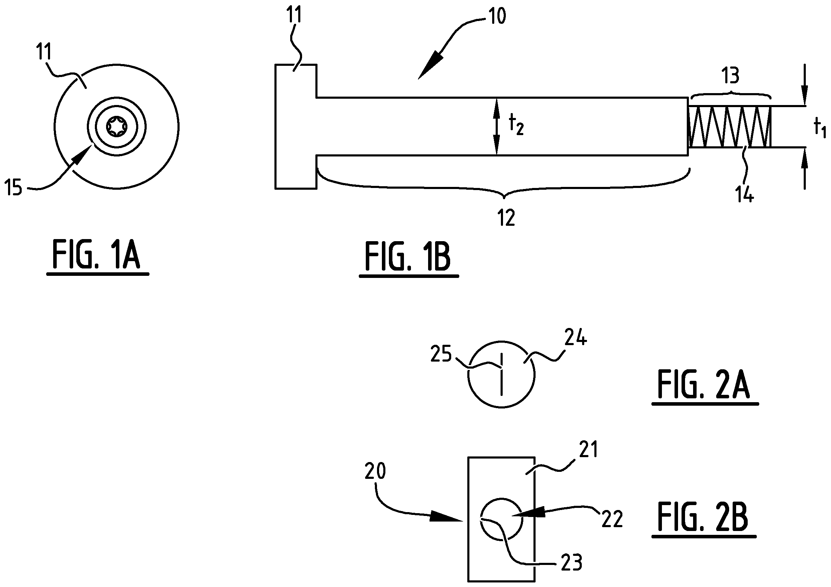

Figure 1 shows a bolt 10 with a head 11 at a first end. At the second, opposite, end a screw thread 14 is arranged inside a relatively short second segment 13 extending from the end toward the head 11 over a limited length. Located between head 11 and second segment 13 is the first segment 12. The bolt 10 has a relatively large diameter t₂ in the first segment 12 and a relatively small diameter t₁ in the second segment 13. The head 11 has a non-round recess 15 at the top (see figure A) for the purpose of engaging thereon with a tool.

Figure 2 shows a bush 20 which is substantially cylindrical. The bush 20 consists of a cylindrical body 21 with a hole 22 in the side wall. The hole is provided with an internal screw thread 23. An end surface 24 of bush 20 is provided with a linear recess 25, on which a tool can engage.

Both the bush 20 and the bolt 10 are manufactured from glass fibre-reinforced polyamide 6.

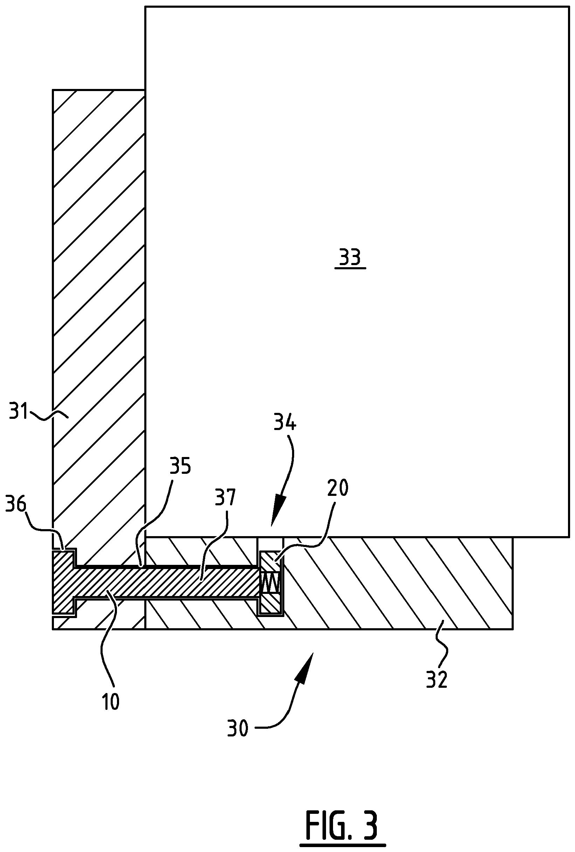

In figure 3 a part of a frame 30 is shown with a first construction part 31 - in this case a jamb - and a second construction part 32 - in this case a sill. A window pane 33 of vacuum glass is arranged in the frame. Bolt 10 is arranged partially in bush 20. The sill 32 lies with its end surface against jamb 31. Arranged in sill 32, particularly in the side thereof, is a blind hole 34. Bush 20 is placed therein. The hole of bush 20 is aligned with a corresponding hole 35 in jamb 31 and hole 37 in sill 32, which runs from the end surface thereof to the first hole 34. Bolt 10 protrudes through these holes 35, 37 and into bush 20, and is screwed fixedly therein. The head 11 of bolt 10 lies wholly countersunk in a recess 36 in the side of jamb 31. The dimensions of the holes 35, 37 in the jamb and the sill are chosen such that they correspond closely to bolt 10 and bush 20.

Although the invention is elucidated above on the basis of specific examples and embodiments, it is not limited thereto. The invention is also defined by the following claims.

## Claims

1. Connecting means for mutually connecting two construction parts positioned substantially at right angles to each other, including a first construction part and a second construction part which lies with its end surface against the first construction part in a mutually connected position, such as the sill and the jamb of a frame, wherein the connecting means comprise:
- a bolt, which is provided at a first end with a head and is provided at a second, opposite end with first screw means; and
- a bush, which is substantially elongate and is provided with second screw means accessible from its side surface in a direction transversely of a longitudinal direction,
wherein the first and second screw means are configured to co-act with each other,
**characterized in that**
the connecting means are manufactured from a fibre-reinforced plastic.

2. Connecting means according to the foregoing claim, wherein the fibre-reinforced plastic comprises polyamide 6.

3. Connecting means according to any one of the foregoing claims, wherein the fibre-reinforced plastic is reinforced with glass fibres.

4. Connecting means according to any one of the foregoing claims, wherein the bush is substantially cylindrical.

5. Connecting means according to any one of the foregoing claims, wherein the bush is provided with an optionally continuous hole for at least partially receiving the bolt.

6. Connecting means according to any one of the foregoing claims, wherein the bush is provided at at least one end with a non-rotation-symmetrical recess, such as a gap or cross-shaped recess.

7. Connecting means according to the foregoing claim, wherein the hole in the bush is provided with an internal screw thread on an outer wall thereof so as to form the second screw means, and wherein the bolt is preferably provided with an external screw thread so as to form the first screw means.

8. Connecting means according to any one of the foregoing claims, wherein the bolt comprises a first segment and a second segment, wherein the second segment comprises the second end and extends toward the head, and the first segment extends between the head and the second segment, wherein screw thread is provided only in the second segment.

9. Connecting means according to the foregoing claim, wherein the bolt has at the position of the second segment an outer diameter which is at most equal to and is preferably smaller than an outer diameter of the bolt at the position of the first segment.

10. Connecting means according to the foregoing claim, wherein the second segment is shorter than the first segment, preferably more than 50% shorter, preferably more than 70% shorter, such as 70% - 80% shorter, such as about 78% shorter.

11. Frame having a sill as first construction part and a jamb as second construction part, or vice versa, wherein the second construction part lies with its end surface against the first construction part, wherein the first and the second construction part are connected to each other by means of connecting means according to any one of the foregoing claims.

12. Frame according to the foregoing claim, wherein the first construction part is provided with a continuous hole through which the bolt is placed, wherein the hole is aligned with the second construction part, and is preferably provided on a side of the first construction part opposite the second construction part with a recess for receiving the head of the bolt.

13. Frame according to any one of the two foregoing claims, wherein the second construction part is provided with a first, optionally blind hole, and wherein the bush is arranged in the hole, and wherein the second construction part is provided with a second hole extending from the end surface into the first hole for the purpose of placing the bolt therethrough.

14. Frame according to any one of the foregoing claims relating to the frame, wherein a window pane is further mounted in the frame, wherein the window pane is manufactured from vacuum glass.

15. Door or window sash, comprising stiles and rails as respectively first and second construction parts, or vice versa, wherein the second construction parts lie in each case with their end surface against first construction parts, wherein the construction parts are connected to each other by means of connecting means according to any one of the claims 1 - 10.
